# EUROPEAN PATENT APPLICATION

(11) **EP 4 507 230 A1**
(43) Date of publication of application: **12.02.2025**
(21) Application number: 23784241.4
(22) Date of filing: 03.04.2023
(51) Int. Cl.: H04L 5/00

(54) **PORT DETERMINATION METHOD AND APPARATUS, TERMINAL, AND READABLE STORAGE MEDIUM**

(30) Priority: 06.04.2022 CN 202210358723
(71) Applicant: Vivo Mobile Communication Co., Ltd., Dongguan, Guangdong 523863 (CN)
(72) Inventor: SUN, Rongrong, Dongguan, Guangdong 523863 (CN); LIU, Hao, Dongguan, Guangdong 523863 (CN); TAMRAKAR, Rakesh, Dongguan, Guangdong 523863 (CN); SONG, Yang, Dongguan, Guangdong 523863 (CN)
(74) Representative: Conti, Marco
(86) International application number: PCT/CN2023/085890
(87) International publication number: WO 2023/193678

(57) **Abstract**

This application discloses a port determining method and apparatus, a terminal, and a readable storage medium, and belongs to the technical field of communications. The port determining method according to embodiments of this application includes: determining, by a terminal, a scheme used for uplink transmission; and determining a demodulation reference signal (DMRS) port for the uplink transmission according to the scheme.

## Description

### CROSS-REFERENCE TO RELATED APPLICATIONS

This application claims the priority of Chinese Patent Application No. 202210358723.3 filed in China on April 6, 2022, the entire content of which is hereby incorporated by reference.

### TECHNICAL FIELD

This application belongs to the technical field of communications, and in particular, relates to a port determining method and apparatus, a terminal, and a readable storage medium.

### BACKGROUND

To improve throughput and reliability of uplink data transmission, a terminal may perform uplink transmission simultaneously by using a plurality of antenna panels (panel). The plurality of panels may simultaneously perform transmission of same or different data on a same frequency domain resource or different frequency domain resources. The uplink transmission of the terminal may be associated with a plurality of demodulation reference signal (Demodulation Reference Signal, DMRS) ports. However, a DMRS port indicator in the related art includes only one DMRS port, which cannot meet a new requirement. In this case, how to interpret DMRS ports is an urgent problem at present.

### SUMMARY

Embodiments of this application provide a port determining method and apparatus, a terminal, and a readable storage medium, which can solve the problem of how to interpret DMRS ports.

In a first aspect, a port determining method is provided, including:
determining, by a terminal, a scheme used for uplink transmission; and
determining, by the terminal, a DMRS port for the uplink transmission according to the scheme.

In a second aspect, a port determining apparatus applied to a terminal is provided, including:
a first determining module configured to determine, by a terminal, a scheme used for uplink transmission; and
a second determining module configured to determine a DMRS port for the uplink transmission according to the scheme.

In a third aspect, a terminal is provided, the terminal including a processor and a memory, where the memory stores a program or an instruction executable on the processor, and when the program or the instruction is executed by the processor, steps of the method as described in the first aspect are implemented.

In a fourth aspect, a terminal is provided, including a processor and a communication interface, where the processor is configured to determine a scheme used for uplink transmission, and determine a DMRS port for the uplink transmission according to the scheme.

In a fifth aspect, a readable storage medium is provided, where the readable storage medium stores a program or an instruction, and when the program or the instruction is executed by a processor, steps of the method as described in the first aspect are implemented.

In a sixth aspect, a chip is provided, where the chip includes a processor and a communication interface, the communication interface is coupled to the processor, and the processor is configured to run a program or an instruction to implement steps of the method as described in the first aspect.

In a seventh aspect, a computer program/program product is provided, where the computer program/program product is stored in a storage medium, and the computer program/program product is executed by at least one processor to implement steps of the method as described in the first aspect.

In the embodiments of this application, the terminal may determine a scheme used for uplink transmission, and determine a DMRS port for the uplink transmission according to the scheme. Therefore, the DMRS ports can be interpreted from the perspective of a transmission scheme of the terminal, to meet DMRS port indication requirements in different transmission schemes.

### BRIEF DESCRIPTION OF THE DRAWINGS

FIG. 1 is a block diagram of a wireless communication system to which an embodiment of this application is applicable;
FIG. 2 is a flowchart of a port determining method according to an embodiment of this application;
FIG. 3A is a schematic diagram I of uplink transmission according to an embodiment of this application;
FIG. 3B is a schematic diagram II of uplink transmission according to an embodiment of this application;
FIG. 3C is a schematic diagram III of uplink transmission according to an embodiment of this application;
FIG. 3D is a schematic diagram IV of uplink transmission according to an embodiment of this application;
FIG. 3E is a schematic diagram V of uplink transmission according to an embodiment of this application;
FIG. 3F is a schematic diagram VI of uplink transmission according to an embodiment of this application;
FIG. 4 is a schematic structural diagram of a port determining apparatus according to an embodiment of this application;
FIG. 5 is a schematic structural diagram of a communication device according to an embodiment of this application; and
FIG. 6 is a schematic structural diagram of a terminal according to an embodiment of this application.

### DETAILED DESCRIPTION

The technical solutions in the embodiments of this application are clearly and completely described in the following with reference to the accompanying drawings in the embodiments of this application. Apparently, the described embodiments are merely some rather than all of the embodiments of this application. All other embodiments obtained by a person of ordinary skill based on the embodiments in this application fall within the protection scope of this application.

The terms "first" and "second" in the specification and claims of this application are used to distinguish similar objects, but are not used to describe a specific order or sequence. It is to be understood that the terms used in this way are interchangeable under appropriate circumstances, so that the embodiments of this application can be implemented in an order different from the order shown or described herein. In addition, the objects distinguished by "first" and "second" are generally of a same type, without limiting a quantity of objects. For example, there may be one or more first objects. In addition, "and/or" in the specification and the claims represents at least one of the connected objects, and the character "/" generally indicates an "or" relationship between associated objects.

It is to be noted that the technology described in the embodiments of this application is not limited to a long term evolution (Long Term Evolution, LTE)/LTE-advanced (LTE-Advanced, LTE-A) system, and may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the described technologies may be used both for the systems and radio technologies mentioned above and may also be used for other systems and radio technologies. A new radio (NR) system is described below for a purpose of example, and NR terms are used in most of the descriptions below. However, these technologies may also be applied to applications other than NR system applications, such as a 6^{th} generation (6^{th} Generation, 6G) communication system.

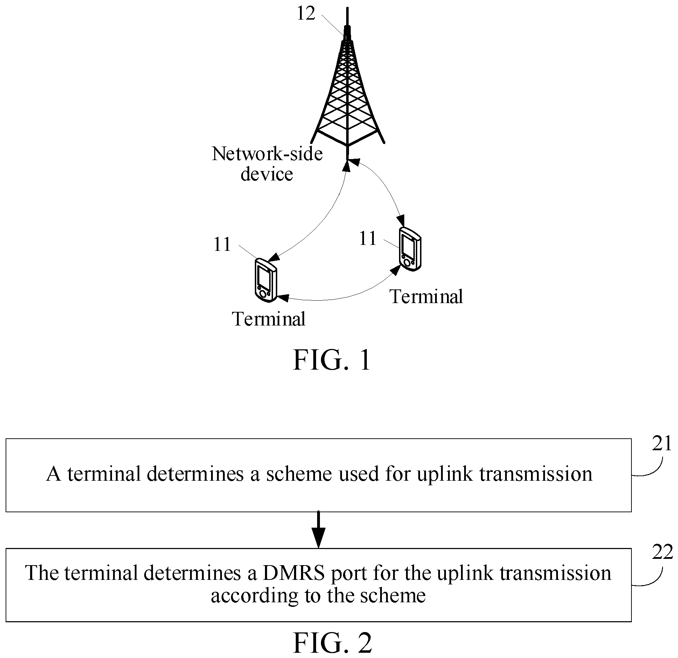

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer, TPC), a laptop computer (Laptop Computer, LP) or notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television set, a washing machine, or a furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It is to be noted that a specific type of the terminal 11 is not limited in this embodiment of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), and another appropriate term in the art. Provided that a same technical effect is achieved, the base station is not limited to a specific technical term. It is to be noted that in this embodiment of this application, the base station in the NR system is merely used as an example, and a specific type of the base station is not limited.

A port determining method and apparatus, a terminal, and a readable storage medium provided in the embodiments of this application are described in detail below through some embodiments and application scenarios thereof with reference to the accompanying drawings.

Referring to FIG. 2, FIG. 2 is a flowchart of a port determining method according to an embodiment of this application. The method is applied to a terminal. As shown in FIG. 2, the method includes the following steps:

Step 21: A terminal determines a scheme used for uplink transmission.

In this embodiment, the scheme used for the uplink transmission may be understood as a scheme supported by a waveform used for the uplink transmission. The waveform includes, but is not limited to, a discrete Fourier transform (Discrete Fourier Transform, DFT) waveform, a cyclic prefix (Cyclic Prefix, CP) waveform, and the like. The DFT waveform is, for example, a discrete Fourier transform-spreaded OFDM (Discrete Fourier Transform-Spreaded OFDM, DFT-S-OFDM) waveform, or the like, which is not limited. The scheme includes, but is not limited to, space division multiplexing (Space Division Multiplexing, SDM), frequency division multiplexing (Frequency Division Multiplexing, FDM), a single frequency network (Single Frequency Network, SFN), and the like.

Step 22: The terminal determines a DMRS port for the uplink transmission according to the scheme.

In this embodiment, the above uplink transmission may include, but is not limited to, physical uplink shared channel (Physical Uplink Shared Channel, PUSCH) transmission, physical uplink control channel (Physical Uplink Control Channel, PUCCH) transmission, and the like.

According to the port determining method in this embodiment of this application, the terminal may determine a scheme used for uplink transmission, and determine a DMRS port for the uplink transmission according to the scheme. Therefore, the DMRS ports can be interpreted from the perspective of a transmission scheme of the terminal, to meet DMRS port indication requirements in different transmission schemes.

Optionally, in this embodiment of this application, if the scheme used for the uplink transmission of the terminal is SDM or SFN, a DMRS port (port) for the uplink transmission may be determined by at least one of the following:
1) The terminal determines a first DMRS port for the uplink transmission according to a first table for interpreting DMRS ports. The first table is related to a sum of ranks indicated by a plurality of sounding reference signal (Sounding Reference Signal) resource indicator (SRS Resource Indicator, SRI) fields, or the first table is related to a sum of ranks indicated by a plurality of transmitted precoding matrix indicator (Transmitted Precoding Matrix Indicator, TPMI) fields. That is, the terminal may determine, according to a sum of ranks indicated by a plurality of sounding reference signal resource indicator (SRI) fields received or according to a sum of ranks indicated by a plurality of transmitted precoding matrix indicator (TPMI) fields received, the first table for interpreting DMRS ports, and determine the first DMRS port for the uplink transmission according to the first table.

In some embodiments, in the SDM scheme, if a network side indicates that the uplink transmission of the terminal is associated with a plurality of target objects, the terminal may determine, according to the sum of ranks indicated by the plurality of SRI fields received (e.g., all the SRI fields received) or according to the sum of ranks indicated by the plurality of TPMI fields received (e.g., all the TPMI fields received), the first table for interpreting DMRS ports.

In some embodiments, in the SFN scheme, if transmission of the terminal associated with a plurality of target objects has an orthogonal DMRS port and the network side indicates that the uplink transmission of the terminal is associated with a plurality of target objects, the terminal may determine, according to the number of ranks indicated by the plurality of SRI fields received (e.g., all the SRI fields received) or according to the sum of ranks indicated by the plurality of TPMI fields received (e.g., all the TPMI fields received), the first table for interpreting DMRS ports.

In some embodiments, the plurality of SRI fields and/or the plurality of TPMI fields may be carried in downlink control information (Downlink Control Information, DCI), which is sent by the network-side device to the terminal.

In some embodiments, when the terminal determines a first DMRS port for the uplink transmission according to a first table, specifically, the first DMRS port for the uplink transmission is selected from the first table according to an antenna port indicator field received by the terminal. That is, the first DMRS port is a DMRS port in the first table indicated by the antenna port indicator field.

For example, if the sum of ranks indicated by the plurality of TPMI/SRI fields is 2, the first table may be, but is not limited to, shown in Table 1 below:

**Table 1**

| Value (Value) | Number of DMRS CDM group(s) without data (Number of DMRS CDM group(s) without data) | DMRS port(s) |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

Referring to Table 1, the Value in Table 1 is related to the antenna port indicator field. For example, a value of the antenna port indicator field may be the Value in Table 1. If the value of the antenna port indicator field is a first value, DMRS ports 0 and 1 from a code division multiplexing (Code Division Multiplexing, CDM) group (group) may be indicated. For example, the first value corresponds to Value 0. If the value of the antenna port indicator field is a second value, DMRS ports 0 and 1 from two CDM groups may be indicated. For example, the second value corresponds to Value 1. If the value of the antenna port indicator field is a third value, DMRS ports 2 and 3 from two CDM groups may be indicated. For example, the third value corresponds to Value 2. If the value of the antenna port indicator field is a fourth value, DMRS ports 0 and 2 from two CDM groups may be indicated. For example, the fourth value corresponds to Value 3.

In another example, if the sum of ranks indicated by the plurality of TPMI fields is 4, the first table may be, but is not limited to, shown in Table 2 below:

**Table 2**

| Value | Number of DMRS CDM group(s) without data | DMRS port(s) |
|---|---|---|
| 0 | 2 | 0-3 |
| 2-7 | Reserved | Reserved |

Referring to Table 2, the Value in Table 2 is related to the antenna port indicator field. For example, a value of the antenna port indicator field may be the Value in Table 2. If the value of the antenna port indicator field is a first value, DMRS ports 0-3 from two CDM groups may be indicated. For example, the first value corresponds to Value 0.

2) The terminal determines a second DMRS port for the uplink transmission according to a second table for interpreting DMRS ports. The second table is related to a rank indicated by a target TPMI field. That is, the terminal may determine, according to the rank indicated by the target TPMI field received, the second table for interpreting DMRS ports, and determine the second DMRS port for the uplink transmission according to the second table.

In some embodiments, in the SDM scheme, if the network side indicates that the uplink transmission of the terminal is associated with a target object, the terminal may determine, according to the rank indicated by the target TPMI field received, the second table for interpreting DMRS ports.

In some embodiments, in the SFN scheme, if transmission of the terminal associated with a plurality of target objects has an orthogonal DMRS port and the network side indicates that the uplink transmission of the terminal is associated with a target object, the terminal may determine, according to the rank indicated by the target TPMI field received, the second table for interpreting DMRS ports.

In some embodiments, in the SFN scheme, if transmission of the terminal associated with a plurality of target objects has a same DMRS port, the terminal may determine, according to the rank indicated by the target TPMI field received, the second table for interpreting DMRS ports.

In some embodiments, the above target TPMI field is a first TPMI field received by the terminal.

In some embodiments, the above target TPMI field may be carried in DCI, which is sent by the network-side device to the terminal.

In some embodiments, when the terminal determines the second DMRS port for the uplink transmission according to the second table, specifically, the second DMRS port for the uplink transmission is selected from the second table according to an antenna port indicator field received by the terminal. That is, the second DMRS port is a DMRS port in the second table indicated by the antenna port indicator field.

For example, if the rank indicated by the target TPMI field is 2, the second table may be, but is not limited to, shown in Table 3 below:

**Table 3**

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

Referring to Table 3, the Value in Table 3 is related to the antenna port indicator field. For example, a value of the antenna port indicator field may be the Value in Table 3. If the value of the antenna port indicator field is a first value, DMRS ports 0 and 1 from a CDM group may be indicated. For example, the first value corresponds to Value 0. If the value of the antenna port indicator field is a second value, DMRS ports 0 and 1 from two CDM groups may be indicated. For example, the second value corresponds to Value 1. If the value of the antenna port indicator field is a third value, DMRS ports 2 and 3 from two CDM groups may be indicated. For example, the third value corresponds to Value 2. If the value of the antenna port indicator field is a fourth value, DMRS ports 0 and 2 from two CDM groups may be indicated. For example, the fourth value corresponds to Value 3.

Optionally, in this embodiment of this application, when the first DMRS port determined in 1) above includes a plurality of DMRS ports from different code division multiplexing (Code Division Multiplexing, CDM) groups (group), the terminal may determine that the uplink transmission thereof is associated with a plurality of target objects and perform the uplink transmission on the plurality of target objects by using the plurality of DMRS ports.

Optionally, in this embodiment of this application, when the first DMRS port determined in 1) above includes a plurality of DMRS ports from a CDM group, the terminal may perform one of the following:
determining, by the terminal, that the uplink transmission is associated with a target object, and performing the uplink transmission on the target object by using the second DMRS port; and
determining, by the terminal, that the uplink transmission is associated with a target object, and performing the uplink transmission on the target object by using first N DMRS ports of the first DMRS port; where N is determined based on the rank indicated by the target TPMI field received by the terminal.

Optionally, in this embodiment of this application, when the scheme used for the uplink transmission of the terminal is FDM and the uplink transmission corresponds to a plurality of DMRS ports from different CDM groups, odd-numbered subcarriers and even-numbered subcarriers of frequency domain resources of the uplink transmission are associated with different target objects. Additionally/alternatively, when the scheme used for the uplink transmission of the terminal is FDM and the uplink transmission corresponds to a plurality of DMRS ports from a same CDM group, different physical resource blocks of the frequency domain resources of the uplink transmission are associated with different target objects.

For example, if the network side configures the transmission scheme of FDM for the terminal through RRC signaling, when a DMRS port indicator of the PUSCH transmission is {0, 2}, odd-numbered subcarriers of frequency domain resources of a PUSCH correspond to one TCI state (panel), and even-numbered subcarriers correspond to another TCI state (panel). If the PUSCH transmission indicates a plurality of DMRS ports from a CDM group, a first PRB of the frequency domain resources of the PUSCH is associated with one TCI state 1 (panel), and a second PRB is associated with another TCI state (panel).

Optionally, in this embodiment of this application, if the scheme used for the uplink transmission of the terminal is FDM or a single frequency network (SFN) and is associated with a plurality of target objects, the DMRS port for the uplink transmission may be determined by at least one of the following:

3) The terminal determines a third DMRS port for the uplink transmission according to a third table for interpreting DMRS ports. The third table is related to a rank indicated by a target TPMI field. That is, the terminal may determine, according to the rank indicated by the target TPMI field received, the third table for interpreting DMRS ports, and determine the third DMRS port for the uplink transmission according to the third table.

Optionally, the third DMRS port includes: a plurality of identical DMRS ports in one-to-one correspondence to the plurality of target objects, that is, a plurality of identical DMRS ports respectively corresponding to the plurality of target objects.

In some embodiments, in the FDM scheme, if transmission of the terminal associated with a plurality of target objects has a code word (Code Word, CW), the terminal may determine, according to the rank indicated by the target TPMI field received, the third table for interpreting DMRS ports.

In some embodiments, the above target TPMI field is the first TPMI field received by the terminal.

In some embodiments, the above target TPMI field may be carried in DCI, which is sent by the network-side device to the terminal.

In some embodiments, when the terminal determines the third DMRS port for the uplink transmission according to the third table, specifically, the third DMRS port for the uplink transmission is selected from the third table according to an antenna port indicator field received by the terminal. That is, the third DMRS port is a DMRS port in the third table indicated by the antenna port indicator field.

For example, if the rank indicated by the target TPMI field is 2, the third table may be, but is not limited to, shown in Table 3 below:

4) The terminal determines a fourth DMRS port for the uplink transmission according to a fourth table for interpreting DMRS ports. The fourth table is related to a maximum value in a plurality of ranks indicated by a plurality of TPMI fields. That is, the terminal may determine, according to the maximum value in the plurality of ranks indicated by the plurality of TPMI fields received, the fourth table for interpreting DMRS ports, and determine the fourth DMRS port for the uplink transmission according to the fourth table.

Optionally, the fourth DMRS port includes at least one of the following: a plurality of DMRS ports corresponding to a first target object, and first M DMRS ports of a plurality of DMRS ports corresponding to a second target object; where the first target object corresponds to the maximum value in the plurality of ranks, the second target object corresponds to any other rank in the plurality of ranks except the maximum value, and M is determined based on a rank indicated by a TPMI field and corresponding to the second target obj ect.

In some embodiments, in the FDM scheme, if transmission of the terminal associated with a plurality of target objects has a plurality of CWs, the terminal may determine, according to the maximum value in the plurality of ranks indicated by the plurality of TPMI fields received (e.g., all the SRI fields received), the fourth table for interpreting DMRS ports.

In some embodiments, when the terminal determines the fourth DMRS port for the uplink transmission according to the fourth table, the plurality of DMRS ports corresponding to the first target object may be selected from the fourth table according to a received antenna port indicator field, and first M DMRS ports of the plurality of DMRS ports are determined to be ports corresponding to the second target object. That is, the first target object corresponds to the DMRS ports in the fourth table that are indicated by the antenna port indicator field, and the second target object corresponds to first M DMRS ports of the DMRS ports in the fourth table that are indicated by the antenna port indicator field.

For example, the uplink transmission of the terminal is associated with two target objects, i.e., a 1^{st} target object and a 2^{nd} target object, which respectively correspond to a first TPMI field and a second TPMI field. If a rank indicated by the first TPMI field is x, a rank indicated by the second TPMI field is y, and x>y, the fourth table for interpreting DMRS ports is determined according to x.

It is to be noted that, in this embodiment of this application, the target object involved is parameters related to uplink data transmission. For example, the target object may include, but is not limited to, a beam (beam), a transmission and reception point (Transmission and Reception Point, TRP), an antenna panel (panel), a transmission configuration indicator (Transmission Configuration Indicator, TCI) state, a TCI state pool, a spatial relation (spatial relation), a sounding reference signal (Sounding Reference Signal, SRS) resource, an SRS resource set, a reference signal, a path loss reference signal, and the like.

The antenna panel may also be referred to as one of the following: an antenna group, an antenna port group, an antenna port set, a beam set, a beam subset, an antenna array, an antenna port array, an antenna subarray, an antenna port subarray, a logical entity, an entity or antenna entity, an antenna panel entity (panel entity), a timing error group (timing error group, TEG), a terminal capability value, a terminal capability value set, and the like.

The antenna panel includes a corresponding panel identifier. The panel identifier may be one of the following: an antenna panel identifier, a reference signal resource identifier, a reference signal resource set identifier, a TCI state identifier, a quasi co-location (Quasi co-location, QCL) information identifier, a spatial relation identifier, a terminal capability value index, a terminal capability value set index, and the like.

Beam information involved in this embodiment may also be referred to as one of the following: beam identification information, spatial relation (spatial relation) information, spatial domain transmission filter (spatial domain transmission filter) information, spatial domain reception filter (spatial domain reception filter) information, spatial filter (spatial filter) information, transmission configuration indicator state (TCI state) information, QCL information, a QCL parameter, and the like. Downlink beam information may generally be represented by TCI state information or QCL information, and uplink beam information may generally be represented by TCI state information.

This application is described below based on an example in which the uplink transmission of the terminal is associated with two TRPs.

### Scheme 1: SDM

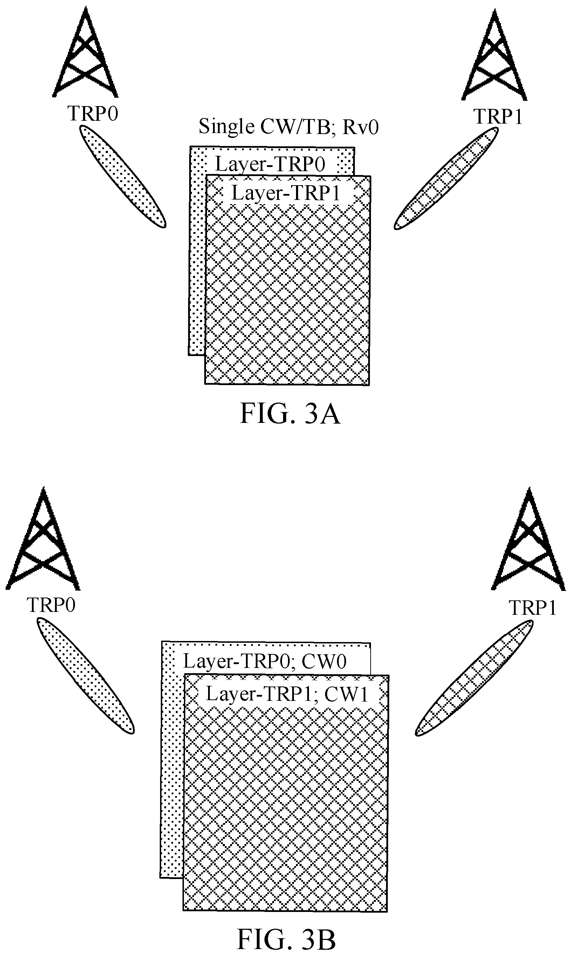

Scheme 1-1: As shown in FIG. 3A, the uplink transmission of the terminal is associated with TRPO and TRP1 and has a CW, and a redundancy version (Redundancy Version, RV) is RV0. Then,
(1) If the network side indicates that two target objects are associated for transmission, interpretation of DMRS ports is determined by a sum of ranks indicated by two SRI fields/TPMIfields received, and only DMRS ports from two CDM groups can be indicated. If the network side indicates that one target object is associated for transmission, the interpretation of DMRS ports is determined by a rank indicated by the first TPMI field received.
(2) In a case that the interpretation of DMRS ports is determined by the sum of ranks indicated by the two SRI fields/TPMI fields received, if a plurality of DMRS ports from different CDM groups are indicated, MTRP transmission is indicated. If a plurality of DMRS ports from a same CDM group are indicated, STRP transmission is switched to, and the DMRS ports are interpreted according to the rank indicated by the first TPMI field received, or first N DMRS ports of the plurality of DMRS ports from the same CDM group indicated are selected for uplink transmission. N is determined based on the rank indicated by the first TPMI field.

Scheme 1-2: As shown in FIG. 3B, the uplink transmission of the terminal is associated with TRPO and TRP1 and has two CWs. In this case, the interpretation of DMRS ports is the same as that in the scheme 1-1, which is not described in detail herein again.

### Scheme 2: FDM

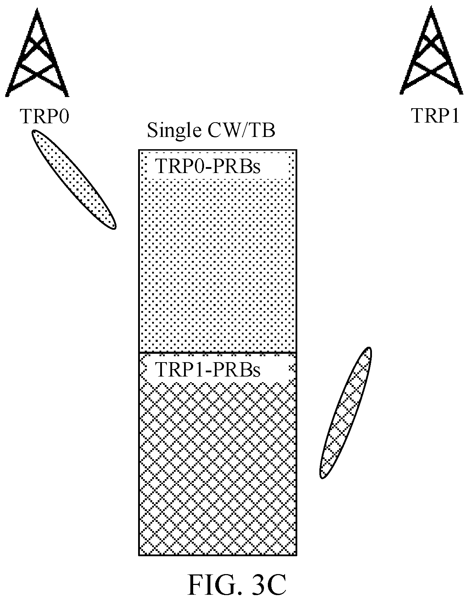

Scheme 2-1: As shown in FIG. 3C, the uplink transmission of the terminal is associated with TRPO and TRP1 and has one CW/1RV, and TRPO and TRP1 correspond to different physical resource block (Physical Resource Block, PRB) resources. Then, the interpretation of DMRS ports is determined by the rank indicated by the first TPMI field received. The two TRPs correspond to a same DMRS port group. That is, the two TRPs respectively correspond to a plurality of identical DMRS ports.

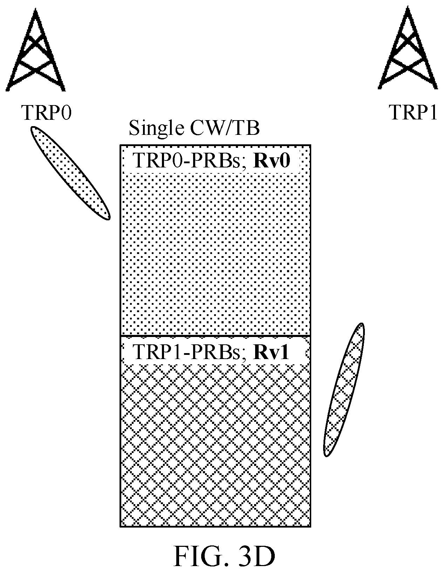

Scheme 2-2: As shown in FIG. 3D, the uplink transmission of the terminal is associated with TRPO and TRP1 and has one CW, TRPO and TRP1 correspond to different physical resource block (PRB) resources, and TRPO and TRP1 respectively have RV0 and RV1. Then, the interpretation of DMRS ports is determined by the rank indicated by the first TPMI field received. The two TRPs correspond to a same DMRS port group. That is, the two TRPs respectively correspond to a plurality of identical DMRS ports.

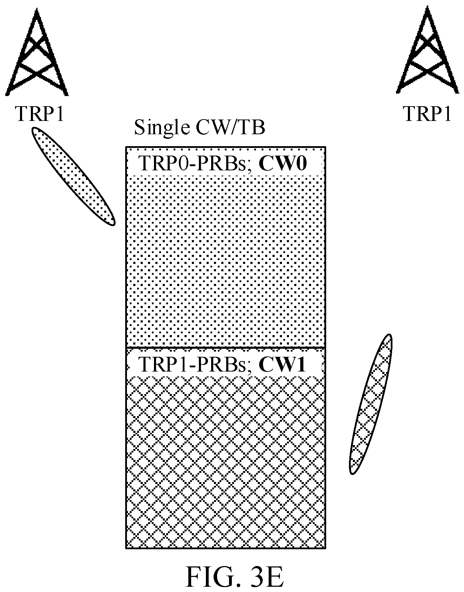

Scheme 2-3: As shown in FIG. 3E, the uplink transmission of the terminal is associated with TRPO and TRP1 and has two CWs, TRPO and TRP1 correspond to different physical resource block (PRB) resources, and TRPO and TRP1 respectively have CW0 and CW1. Then, the interpretation of DMRS ports is determined by the larger one of the ranks indicated by the two TPMI fields received. The TRP corresponding to the TPMI field with a small rank takes first M DMRS ports in the corresponding table that are indicated by the antenna port indicator field. M is determined based on the rank indicated by the TPMI field with the small rank.

### Scheme 3: SFN

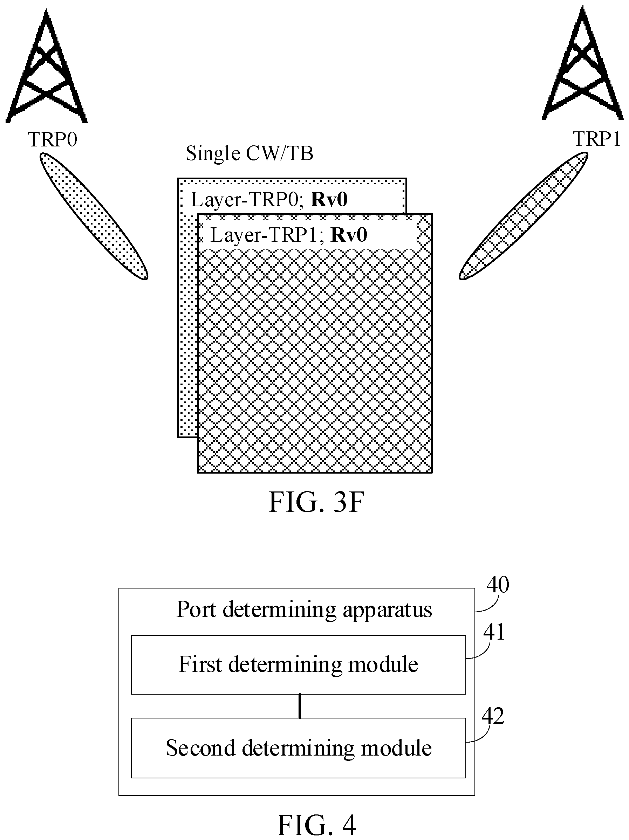

Scheme 3-1: As shown in FIG. 3F, the uplink transmission of the terminal is associated with TRPO and TRP1 and has one CW, and TRPO and TRP1 have a same RV0. Then,
(1) If TRPO and TRP1 correspond to a same DMRS port, the interpretation of DMRS ports is determined by the rank indicated by the first TPMI field received. The two TRPs correspond to a same DMRS port group. That is, the two TRPs respectively correspond to a plurality of identical DMRS ports.
(2) If TRPO and TRP1 correspond to orthogonal DMRS ports, it is similar to that in the SDM scheme, which is not described in detail herein again.

Optionally, the determining a DMRS port for the uplink transmission in step 22 may include: determining, by the terminal, the DMRS port for the uplink transmission according to a fifth table for interpreting DMRS ports, where the fifth table includes at least one first entry, and the first entry is used for indicating a plurality of DMRS ports for the uplink transmission associated with a plurality of target objects. In other words, the table for interpreting DMRS ports determined in this embodiment may include at least one first entry, and the first entry indicates a plurality of DMRS ports for the uplink transmission associated with a plurality of target objects.

For example, the above fifth table may be, but is not limited to, shown in Table 4 below:

**Table 4**

| Value (Value) | Number of DMRS CDM group(s) without data (Number of DMRS CDM group(s) without data) | DMRS port(s) |
|---|---|---|
| 0 | 2 | 0 |
| 1 | 2 | 1 |
| 2 | 2 | 2 |
| 3 | 2 | 3 |
| **4** | **2** | **0,2** |
| 5-7 | Reserved | Reserved |

In Table 4, the first entry is an entry corresponding to Value 4, indicating two DMRS ports for uplink transmission associated with two target objects. That is, DMRS ports 0 and 2 are indicated.

In another example, the above fifth table may be, but is not limited to, shown in Table 5 below:

**Table 5**

| Value | Number of DMRS CDM group(s) without data | DMRS port(s) | Number of front-load symbols |
|---|---|---|---|
| 0 | 2 | 0 | 1 |
| 1 | 2 | 1 | 1 |
| 2 | 2 | 2 | 1 |
| 3 | 2 | 3 | 1 |
| 4 | 2 | 0 | 2 |
| 5 | 2 | 1 | 2 |
| 6 | 2 | 2 | 2 |
| 7 | 2 | 3 | 2 |
| 8 | 2 | 4 | 2 |
| 9 | 2 | 5 | 2 |
| 10 | 2 | 6 | 2 |
| 11 | 2 | 7 | 2 |
| **12** | **2** | **0,2** | **1** |
| **13** | **2** | **4,6** | **2** |
| 14-15 | Reserved | Reserved | Reserved |

In Table 5, the first entry includes entries corresponding to Value 12 and Value 13, indicating two DMRS ports for uplink transmission associated with two target objects. That is, the entry corresponding to Value 12 indicates DMRS ports 0 and 2, and the entry corresponding to Value 13 indicates DMRS ports 4 and 6.

In another example, the above fifth table may be, but is not limited to, shown in Table 6 below:

**Table 6**

| Value | Number of DMRS CDM group(s) without data | DMRS port(s) | Number of front-load symbols |
|---|---|---|---|
| 0 | 2 | 0 | 1 |
| 1 | 2 | 1 | 1 |
| 2 | 2 | 2 | 1 |
| 3 | 2 | 3 | 1 |
| 4 | 2 | 0 | 2 |
| 5 | 2 | 1 | 2 |
| 6 | 2 | 2 | 2 |
| 7 | 2 | 3 | 2 |
| 8 | 2 | 4 | 2 |
| 9 | 2 | 5 | 2 |
| 10 | 2 | 6 | 2 |
| 11 | 2 | 7 | 2 |
| **12** | **2** | **0,2** | **1** |
| 13-15 | Reserved | Reserved | Reserved |

In Table 6, the first entry includes an entry corresponding to Value 12, indicating two DMRS ports for uplink transmission associated with two target objects. That is, the entry corresponding to Value 12 indicates DMRS ports 0 and 2, which are from two CDM groups.

Optionally, in this embodiment of this application, the DMRS port for the uplink transmission may be determined based on an antenna port indicator field received by the terminal. Step 22 above may include: determining, by the terminal, a fifth DMRS port for the uplink transmission according to the scheme and an antenna port indicator field received by the terminal. In other words, after the scheme used for the uplink transmission is determined, a table for interpreting DMRS ports may be first determined according to the scheme, and then the DMRS port for the uplink transmission may be determined according to the antenna port indicator field received by the terminal.

Optionally, when the uplink transmission of the terminal is associated with a plurality of target objects, the above fifth DMRS port may include: a plurality of DMRS ports indicated by the antenna port indicator field, where the plurality of DMRS ports are from different CDM groups or a same CDM group. For example, in a case that the uplink transmission adopts SDM, the plurality of DMRS ports are from different CDM groups. Alternatively, in a case that the uplink transmission adopts FDM, the plurality of DMRS ports are from a same CDM group.

For example, a bit length of the antenna port indicator field may be 3 bits or 4 bits to indicate the DMRS port for the uplink transmission. For example, in a case that the DMRS ports are interpreted based on Table 1 above, if the uplink transmission of the terminal is associated with a plurality of target objects, DMRS ports 0 and 2 in the entry corresponding to Value 4 may be indicated. Alternatively, in a case that the DMRS ports are interpreted based on Table 2 above, if the uplink transmission of the terminal is associated with a plurality of target objects, DMRS ports 0 and 2 in the entry corresponding to Value 12 may be indicated, and DMRS ports 4 and 6 in the entry corresponding to Value 13 may also be indicated

Optionally, if the uplink transmission of the terminal is associated with a plurality of target objects, the terminal may determine a plurality of DMRS ports for the uplink transmission according to a protocol definition. For example, a DMRS port group (i.e., a plurality of DMRS ports) for the PUSCH transmission associated with a plurality of target objects is agreed by a protocol, for example, {0, 2}, and a DMRS port for the PUSCH transmission associated with a target object is indicated by the antenna port indicator field. Then, when the PUSCH is scheduled to be transmission associated with a plurality of target objects, the DMRS ports for the PUSCH transmission may be determined to be 0 and 2, and the antenna port indicator field indicating the DMRS port may be ignored.

Optionally, if the uplink transmission of the terminal is associated with a plurality of target objects, the terminal may determine, according to a DMRS port indicated by the antenna port indicator field received by the terminal, a plurality of DMRS ports for the uplink transmission that include the DMRS port. For example, the PUSCH transmission is associated with a plurality of target objects, and a plurality of DMRS port groups are preset, for example, (0,2), (1,3), (4,6), and (5,7). If the antenna port indicator field received by the terminal indicates a DMRS port 0, it may be determined that the DMRS port for the PUSCH transmission includes DMRS ports 0 and 2. If the antenna port indicator field received by the terminal indicates a DMRS port 4, it may be determined that the DMRS port for the PUSCH transmission includes DMRS ports 4 and 6.

Optionally, in a case that a plurality of target objects are associated with a plurality of CDM groups one by one, that is, the plurality of target objects are respectively associated with the plurality of CDM groups, the terminal may determine, according to a CDM group to which the DMRS port for the uplink transmission thereof belongs, a target object associated with the uplink transmission. For example, a first CDM group is associated with a 1^{st} target object, and a second CDM group is associated with a 2^{nd} target object. Then, if only a DMRS port of the first CDM group is indicated, that is, the PUSCH transmission of the terminal belongs to the first CDM group, the PUSCH transmission is associated with the 1^{st} target object; alternatively, if only a DMRS port of the second CDM group is indicated, that is, the PUSCH transmission of the terminal belongs to the second CDM group, the PUSCH transmission is associated with the 2^{nd} target object; alternatively, if the DMRS ports of the first CDM group and the second CDM group are both indicated, i.e., a plurality of DMRS ports for the PUSCH transmission of the terminal are from two different CDM groups, the PUSCH transmission is associated with the 1^{st} target object and the 2^{nd} target object.

Optionally, if the uplink transmission of the terminal adopts a transmission scheme associated with a plurality of target objects, the transmission scheme may be enabled by at least one of the following:
radio resource control (RRC) configuration; (i.e., it is indicated through the RRC configuration that the uplink transmission of the terminal is associated with the plurality of target objects);
TCI states corresponding to the plurality of target objects taking effect; (i.e., when the TCI states corresponding to the plurality of target objects currently take effect, the uplink transmission associated with the plurality of target objects is enabled);
scheduling a DCI indicator of the uplink transmission; (i.e., it is indicated by scheduling DCI of the uplink transmission that the uplink transmission is associated with the plurality of target objects); and
a network side indicating DMRS ports from different CDM groups; (i.e., it is indicated by indicating the DMRS ports from different CDM groups that the corresponding uplink transmission is associated with the plurality of target objects).

The port determining method provided in this embodiment of this application may be performed by a port determining apparatus. In the embodiments of this application, a port determining apparatus provided in an embodiment of this application is described based on an example in which the port determining apparatus performs the port determining method.

Referring to FIG. 4, FIG. 4 is a schematic structural diagram of a port determining apparatus according to an embodiment of this application. The apparatus is applied to a terminal. As shown in FIG. 4, the port determining apparatus 40 includes:
a first determining module 41 configured to determine, by a terminal, a scheme used for uplink transmission; and
a second determining module 42 configured to determine a DMRS port for the uplink transmission according to the scheme.

Optionally, the scheme is space division multiplexing (SDM) or a single frequency network (SFN); and the second determining module 42 is specifically configured to perform at least one of the following:
determining a first DMRS port for the uplink transmission according to a first table for interpreting DMRS ports, where the first table is related to a sum of ranks indicated by a plurality of SRI fields, or the first table is related to a sum of ranks indicated by a plurality of TPMI fields; and
determining a second DMRS port for the uplink transmission according to a second table for interpreting DMRS ports, where the second table is related to a rank indicated by a target TPMI field.

Optionally, when the first DMRS port includes a plurality of DMRS ports from different code division multiplexing (CDM) groups, the port determining apparatus 40 further includes:
a first transmission module configured to determine that the uplink transmission is associated with a plurality of target objects, and perform the uplink transmission on the plurality of target objects by using the plurality of DMRS ports.

Optionally, when the first DMRS port includes a plurality of DMRS ports from a same CDM group, the port determining apparatus 40 further includes: a second transmission module, where the second transmission module is specifically configured to perform one of the following:
determining that the uplink transmission is associated with a target object, and perform the uplink transmission on the target object by using the second DMRS port; and
determining that the uplink transmission is associated with a target object, and perform the uplink transmission on the target object by using first N DMRS ports of the first DMRS port; where N is determined based on the rank indicated by the target TPMI field and received by the terminal.

Optionally, the scheme is frequency division multiplexing (FDM) or a single frequency network (SFN); and the second determining module 42 is specifically configured to perform one of the following:
determining a third DMRS port for the uplink transmission according to a third table for interpreting DMRS ports, where the third table is related to a rank indicated by a target TPMI field; and
determining a fourth DMRS port for the uplink transmission according to a fourth table for interpreting DMRS ports, where the fourth table is related to a maximum value in a plurality of ranks indicated by a plurality of TPMI fields.

Optionally, the uplink transmission is associated with a plurality of target objects, and the third DMRS port includes: a plurality of identical DMRS ports in one-to-one correspondence to the plurality of target objects;
alternatively, the uplink transmission is associated with a plurality of target objects, and the fourth DMRS port includes at least one of the following: a plurality of DMRS ports corresponding to a first target object, and first M DMRS ports of a plurality of DMRS ports corresponding to a second target object; where the first target object corresponds to the maximum value in the plurality of ranks, the second target object corresponds to any other rank in the plurality of ranks except the maximum value, and M is determined based on a rank indicated by a TPMI field and corresponding to the second target object.

Optionally, the second determining module 42 is specifically configured to:
determine a DMRS port for the uplink transmission according to a fifth table for interpreting DMRS ports; where the fifth table is related to the scheme, the fifth table includes at least one first entry, and the first entry is used for indicating a plurality of DMRS ports for uplink transmission associated with a plurality of target objects.

Optionally, the second determining module 42 is specifically configured to:
determine a fifth DMRS port for the uplink transmission according to the scheme and an antenna port indicator field received by the terminal.

Optionally, when the uplink transmission is associated with a plurality of target objects, the fifth DMRS port includes: a plurality of DMRS ports indicated by the antenna port indicator field, where the plurality of DMRS ports are from different CDM groups or a same CDM group.

Optionally, if the uplink transmission adopts a transmission scheme in which a plurality of target objects are associated, the transmission scheme is enabled by at least one of the following:
RRC configuration;
TCI states corresponding to the plurality of target objects taking effect;
scheduling a DCI indicator of the uplink transmission; and
a network side indicating DMRS ports from different CDM groups.

The port determining apparatus 30 in this embodiment of this application may be an electronic device, such as an electronic device with an operating system, or a component in an electronic device, such as an integrated circuit or a chip. The electronic device may be a terminal or other devices other than the terminal. For example, the terminal may include, but is not limited to, the types of the terminal 11 listed above, and other devices may be servers, network attached storages (Network Attached Storage, NAS), or the like, which are not specifically limited in this embodiment of this application.

The port determining apparatus 40 provided in this embodiment of this application can implement the processes implemented in the method embodiment of FIG. 2 and achieve the same technical effects. To avoid repetition, details are not described herein again.

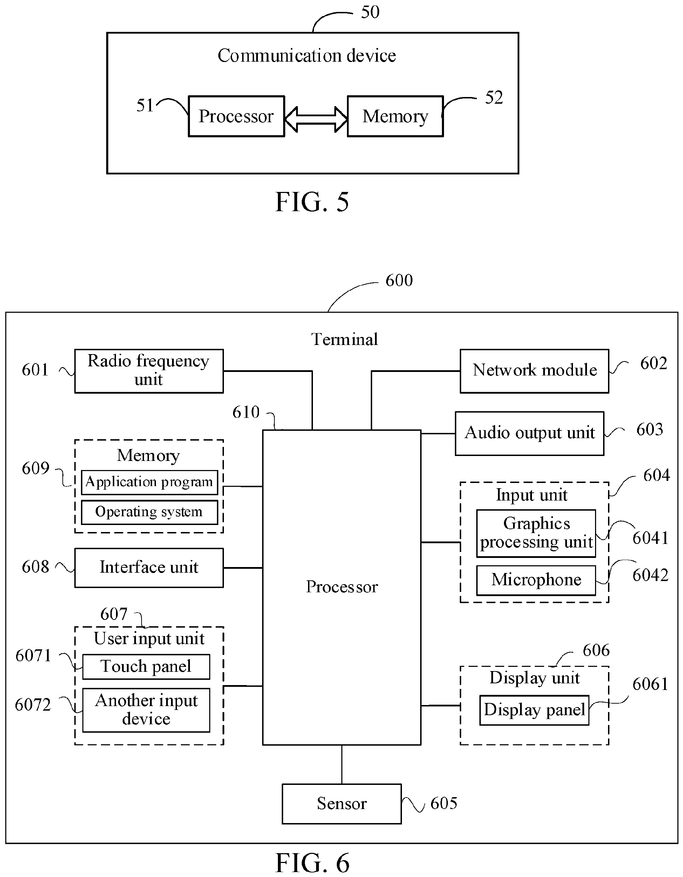

Optionally, as shown in FIG. 5, an embodiment of this application further provides a communication device 50, including a processor 51 and a memory 52. The memory 52 stores a program or an instruction executable on the processor 51. When the program or the instruction is executed by the processor 51, steps in the embodiment of the port determining method above are implemented, and the same technical effects can be achieved. To avoid repetition, details are not described herein again.

An embodiment of this application further provides a terminal, including a processor and a communication interface. The processor is configured to determine a scheme used for uplink transmission; and determine a demodulation reference signal (DMRS) port for the uplink transmission according to the scheme. The terminal embodiment corresponds to the above terminal-side method embodiment. All implementation processes and implementation manners of the above method embodiment are applicable to the terminal embodiment, and the same technical effects can be achieved.

Specifically, FIG. 6 is a schematic structural diagram of a hardware structure of a terminal according to an embodiment of this application.

The terminal 600 includes, but is not limited to, at least part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) for supplying power to the components. The power supply may be logically connected to the processor 610 through a power management system, thereby implementing functions such as charging, discharging, and power consumption management by using the power management system. The terminal structure shown in FIG. 6 does not constitute any limitation on the terminal, and the terminal may include more or fewer components than shown, or combine some components, or have different component arrangements.

It is to be understood that in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include, but is not limited to, a physical keyboard, a functional key (such as a volume control key or a switch key), a track ball, a mouse, and a joystick. Details are not described herein again.

In this embodiment of this application, the radio frequency unit 601 receives downlink data from a network-side device, which may be transmitted to the processor 610 for processing. In addition, the radio frequency unit 601 may send uplink data to the network-side device. Generally, the radio frequency unit 601 includes, but is not limited to, an antenna, an amplifier, a transceiver, a coupler, a low noise amplifier, a duplexer, and the like.

The memory 609 may be configured to store software programs or instructions and various data. The memory 609 may mainly include a first storage area for storing programs or instructions and a second storage area for storing data. The first storage area may store an operating system, an application program or instructions required by at least one function (for example, a sound playback function and an image playback function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 609 in this embodiment of this application includes, but is not limited to, these memories and any other suitable types of memories.

The processor 610 may include one or more processing units. Optionally, the processor 610 may integrate an application processor and a modem processor. The application processor mainly processes an operating system, a user interface, an application program, and the like. The modem processor mainly processes a wireless communication signal, which is, for example, a baseband processor. It may be understood that the foregoing modem processor may not be integrated into the processor 610.

The processor 610 is configured to determine a scheme used for uplink transmission; and determine a demodulation reference signal (DMRS) port for the uplink transmission according to the scheme.

The terminal 600 provided in this embodiment of this application can implement the processes implemented in the method embodiment of FIG. 2 and achieve the same technical effects. To avoid repetition, details are not described herein again.

An embodiment of this application further provides a readable storage medium. The readable storage medium stores a program or an instruction. When the program or the instruction is executed by a processor, the processes in the foregoing embodiments of the port determining method are implemented, and the same technical effects can be achieved. To avoid repetition, details are not described herein again.

The processor is the processor in the terminal in the above embodiments. The readable storage medium includes a computer-readable storage medium, such as a computer read-only memory (ROM), a random access memory (RAM), a magnetic disk, or an optical disc.

An embodiment of this application further provides a chip. The chip includes a processor and a communication interface. The communication interface is coupled to the processor. The processor is configured to run a program or an instruction to implement the processes in the embodiments of the port determining method, and the same technical effects can be achieved. To avoid repetition, details are not described herein again.

It is to be understood that the chip as referred to in this embodiment of this application may alternatively be called a system-on-chip, a system chip, a chip system, a system-on-a-chip, or the like.

An embodiment of this application further provides a computer program/program product. The computer program/program product is stored in a storage medium. The computer program/program product is executed by at least one processor to implement the processes in the embodiments of the port determining method, and the same technical effects can be achieved. To avoid repetition, details are not described herein again.

An embodiment of this application further provides a communication system, including: a terminal and a network-side device. The terminal is configured to perform steps of the port determining method as described above. The network-side device may configure related parameters and/or send related parameters for/to the terminal.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but such implementation is not to be considered beyond the scope of the present disclosure.

A person skilled in the art may clearly understand that for convenience and conciseness of description, for specific working processes of the foregoing systems, apparatuses and units, reference may be made to the corresponding processes in the foregoing method embodiments, and details are not described herein again.

In the several embodiments provided in this application, it is to be understood that the disclosed apparatus and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of the present disclosure may be integrated into one processing unit, or each of the units may be physically separated, or two or more units may be integrated into one unit.

When the function is implemented in the form of a software functional unit and sold or used as an independent product, the function may be stored in a computer-readable storage medium. Based on such an understanding, the technical solutions of the present disclosure essentially, or the part contributing to the related art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: various media that may store program code, such as a USB flash drive, a removable hard disk, a ROM, a RAM, a magnetic disk, or an optical disc.

A person of ordinary skill in the art may understand that all or some of the processes of the methods in the above embodiments may be implemented by a computer program instructing relevant hardware. The program may be stored in a computer-readable storage medium. When the program is executed, the procedures of the foregoing method embodiments are performed. The foregoing storage medium may include a magnetic disk, an optical disc, a read-only memory (ROM), a random access memory (RAM), or the like.

It is to be noted that the terms "comprise", "include", and any other variants thereof are intended to cover non-exclusive inclusion, so that a process, a method, an item, or an apparatus that includes a series of elements not only includes these elements, but may also include other elements not expressly listed, or also include elements inherent to this process, method, item, or apparatus. Without more limitations, an element defined by a phrase "including a/an..." does not exclude presence of other identical elements in the process, method, item, or apparatus that includes the element. In addition, it is to be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

According to the descriptions in the foregoing implementations, a person skilled in the art may clearly understand that the method in the foregoing embodiment may be implemented by software plus a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings, but this application is not limited to the foregoing specific implementations. The foregoing specific implementations are merely schematic instead of restrictive. Under enlightenment of this application, a person of ordinary skill in the art may make many forms without departing from aims of this application and the protection scope of the claims, all of which fall within the protection scope of this application.

## Claims

1. A port determining method, comprising:
determining, by a terminal, a scheme used for uplink transmission; and
determining, by the terminal, a demodulation reference signal (DMRS) port for the uplink transmission according to the scheme.

2. The method according to claim 1, wherein the scheme is spatial division multiplexing (SDM) or a single frequency network (SFN); and the determining a demodulation reference signal (DMRS) port for the uplink transmission comprises at least one of the following:
determining, by the terminal, a first DMRS port for the uplink transmission according to a first table for interpreting DMRS ports, wherein the first table is related to a sum of ranks indicated by a plurality of sounding reference signal resource indicator (SRI) fields, or the first table is related to a sum of ranks indicated by a plurality of transmitted precoding matrix indicator (TPMI) fields; and
determining, by the terminal, a second DMRS port for the uplink transmission according to a second table for interpreting DMRS ports, wherein the second table is related to a rank indicated by a target TPMI field.

3. The method according to claim 2, wherein when the first DMRS port comprises a plurality of DMRS ports from different code division multiplexing (CDM) groups, the method further comprises:
determining, by the terminal, that the uplink transmission is associated with a plurality of target objects, and performing the uplink transmission on the plurality of target objects by using the plurality of DMRS ports;
or
when the first DMRS port comprises a plurality of DMRS ports from a CDM group, the method further comprises one of the following:
determining, by the terminal, that the uplink transmission is associated with a target object, and performing the uplink transmission on the target object by using the second DMRS port; and
determining, by the terminal, that the uplink transmission is associated with a target object, and performing the uplink transmission on the target object by using first N DMRS ports of the first DMRS port; wherein N is determined based on the rank indicated by the target TPMI field received by the terminal.

4. The method according to claim 1, wherein the scheme is frequency division multiplexing (FDM) or a single frequency network (SFN); and the determining a demodulation reference signal (DMRS) port for the uplink transmission comprises one of the following:
determining, by the terminal, a third DMRS port for the uplink transmission according to a third table for interpreting DMRS ports, wherein the third table is related to a rank indicated by a target TPMI field; and
determining, by the terminal, a fourth DMRS port for the uplink transmission according to a fourth table for interpreting DMRS ports, wherein the fourth table is related to a maximum value in a plurality of ranks indicated by a plurality of TPMI fields.

5. The method according to claim 4, wherein the uplink transmission is associated with a plurality of target objects, and the third DMRS port comprises: a plurality of identical DMRS ports in one-to-one correspondence to the plurality of target objects;
or
the uplink transmission is associated with a plurality of target objects, and the fourth DMRS port comprises at least one of the following: a plurality of DMRS ports corresponding to a first target object, and first M DMRS ports of the plurality of DMRS ports corresponding to a second target object; wherein the first target object corresponds to the maximum value in the plurality of ranks, the second target object corresponds to any other rank in the plurality of ranks except the maximum value, and M is determined based on a rank indicated by a TPMI field and corresponding to the second target object.

6. The method according to claim 1, wherein the determining a demodulation reference signal (DMRS) port for the uplink transmission according to the scheme comprises:
determining, by the terminal, a DMRS port for the uplink transmission according to a fifth table for interpreting DMRS ports, wherein the fifth table is related to the scheme, the fifth table comprises at least one first entry, and the first entry is used for indicating a plurality of DMRS ports for uplink transmission associated with a plurality of target objects.

7. The method according to claim 1, wherein the determining a demodulation reference signal (DMRS) port for the uplink transmission according to the scheme comprises:
determining, by the terminal, a fifth DMRS port for the uplink transmission according to the scheme and an antenna port indicator field received by the terminal.

8. The method according to claim 7, wherein when the uplink transmission is associated with a plurality of target objects, the fifth DMRS port comprises: a plurality of DMRS ports indicated by the antenna port indicator field, wherein the plurality of DMRS ports are from different CDM groups or a same CDM group.

9. The method according to claim 1, wherein if the uplink transmission is associated with a plurality of target objects, the method further comprises:
determining, by the terminal, a plurality of DMRS ports for the uplink transmission according to a protocol definition;
or
determining, by the terminal, a plurality of DMRS ports for the uplink transmission that comprise the DMRS port, according to a DMRS port indicated by an antenna port indicator field received by the terminal.

10. The method according to claim 1, wherein in a case that a plurality of target objects are associated with a plurality of CDM groups one by one, the method further comprises:
determining, by the terminal according to a CDM group to which the DMRS port for the uplink transmission belongs, a target object associated with the uplink transmission.

11. The method according to claim 1, wherein if the uplink transmission adopts a transmission scheme in which a plurality of target objects are associated, the transmission scheme is enabled by at least one of the following:
radio resource control (RRC) configuration;
transmission configuration indicator (TCI) states corresponding to the plurality of target objects taking effect;
scheduling a downlink control information (DCI) indicator of the uplink transmission; and
a network side indicating DMRS ports from different CDM groups.

12. The method according to claim 1, wherein when the scheme is FDM and the uplink transmission corresponds to a plurality of DMRS ports from different CDM groups, odd-numbered subcarriers and even-numbered subcarriers of frequency domain resources of the uplink transmission are associated with different target objects;
and/or
when the scheme is FDM and the uplink transmission corresponds to a plurality of DMRS ports from a same CDM group, different physical resource blocks of the frequency domain resources of the uplink transmission are associated with different target objects.

13. A port determining apparatus, comprising:
a first determining module configured to determine, by a terminal, a scheme used for uplink transmission; and
a second determining module configured to determine a DMRS port for the uplink transmission according to the scheme.

14. The apparatus according to claim 13, wherein the scheme is space division multiplexing (SDM) or a single frequency network (SFN); and the second determining module is specifically configured to perform at least one of the following:
determining a first DMRS port for the uplink transmission according to a first table for interpreting DMRS ports, wherein the first table is related to a sum of ranks indicated by a plurality of SRI fields, or the first table is related to a sum of ranks indicated by a plurality of TPMI fields; and
determining a second DMRS port for the uplink transmission according to a second table for interpreting DMRS ports, wherein the second table is related to a rank indicated by a target TPMI field.

15. The apparatus according to claim 14, wherein when the first DMRS port comprises a plurality of DMRS ports from different code division multiplexing (CDM) groups, the apparatus further comprises:
a first transmission module configured to determine that the uplink transmission is associated with a plurality of target objects, and perform the uplink transmission on the plurality of target objects by using the plurality of DMRS ports;
or
when the first DMRS port comprises a plurality of DMRS ports from a CDM group, the apparatus further comprises: a second transmission module, wherein the second transmission module is specifically configured to perform one of the following:
determining that the uplink transmission is associated with a target object, and perform the uplink transmission on the target object by using the second DMRS port; and
determining that the uplink transmission is associated with a target object, and perform the uplink transmission on the target object by using first N DMRS ports of the first DMRS port; wherein N is determined based on the rank indicated by the target TPMI field received by the terminal.

16. The apparatus according to claim 13, wherein the scheme is frequency division multiplexing (FDM) or a single frequency network (SFN); and the second determining module is specifically configured to perform one of the following:
determining a third DMRS port for the uplink transmission according to a third table for interpreting DMRS ports, wherein the third table is related to a rank indicated by a target TPMI field; and
determining a fourth DMRS port for the uplink transmission according to a fourth table for interpreting DMRS ports, wherein the fourth table is related to a maximum value in a plurality of ranks indicated by a plurality of TPMI fields.

17. The apparatus according to claim 16, wherein the uplink transmission is associated with a plurality of target objects, and the third DMRS port comprises: a plurality of identical DMRS ports in one-to-one correspondence to the plurality of target objects;
or
the uplink transmission is associated with a plurality of target objects, and the fourth DMRS port comprises at least one of the following: a plurality of DMRS ports corresponding to a first target object, and first M DMRS ports of a plurality of DMRS ports corresponding to a second target object; wherein the first target object corresponds to the maximum value in the plurality of ranks, the second target object corresponds to any other rank in the plurality of ranks except the maximum value, and M is determined based on a rank indicated by a TPMI field and corresponding to the second target object.

18. The apparatus according to claim 13, wherein the second determining module is specifically configured to:
determine a DMRS port for the uplink transmission according to a fifth table for interpreting DMRS ports, wherein the fifth table is related to the scheme, the fifth table comprises at least one first entry, and the first entry is used for indicating a plurality of DMRS ports for uplink transmission associated with a plurality of target objects.

19. The apparatus according to claim 13, wherein the second determining module is specifically configured to:
determine a fifth DMRS port for the uplink transmission according to the scheme and an antenna port indicator field received by the terminal.

20. The apparatus according to claim 19, wherein when the uplink transmission is associated with a plurality of target objects, the fifth DMRS port comprises: a plurality of DMRS ports indicated by the antenna port indicator field, wherein the plurality of DMRS ports are from different CDM groups or a same CDM group.

21. The apparatus according to claim 13, wherein if the uplink transmission adopts a transmission scheme in which a plurality of target objects are associated, the transmission scheme is enabled by at least one of the following:
RRC configuration;
TCI states corresponding to the plurality of target objects taking effect;
scheduling a DCI indicator of the uplink transmission; and
a network side indicating DMRS ports from different CDM groups.

22. A terminal, comprising a processor and a memory, wherein the memory stores a program or an instruction executable on the processor, and when the program or the instruction is executed by the processor, steps of the port determining method according to any one of claims 1 to 12 are implemented.

23. A readable storage medium, wherein the readable storage medium stores a program or an instruction, and when the program or the instruction is executed by a processor, steps of the port determining method according to any one of claims 1 to 12 are implemented.
